# EUROPEAN PATENT APPLICATION

(11) **EP 1 743 790 A1**
(43) Date of publication of application: **17.01.2007**
(21) Application number: 06380114.6
(22) Date of filing: 17.05.2006
(51) Int. Cl.: B60H 1/34

(54) **Air diffuser for vehicle dashboards**

(30) Priority: 13.07.2005 ES 200501615 U
(71) Applicant: Seat, S.A., 08040 Barcelona (ES)
(72) Inventor: Perez Perez, Fernando Jesus, Seat S.A., 08760 Martorell Barcelona (ES); Ferre Ripoll, Jaume, Seat S.A., 08760 Martorell Barcelona (ES); Galvez Saracibar, Juan Ramon, Seat S.A., 08760 Martorell Barcelona (ES)
(74) Representative: Carvajal y Urquijo, Isabel

(57) **Abstract**

An air diffuser for vehicle dashboards, constituted by a fixed tubular casing of a circular section; a moveable tubular casing, also of a circular section, which is coaxially assembled inside the fixed casing with free rotational ability about the same; and an assembly of integral flaps, inscribed in a spherical surface which has the same diameter as the inner diameter of the moveable casing assembled on said moveable casing with freedom of rotation around a diametrical axis, between a closing position of opening and an opening position.

## Description

### Field of the Invention

The present invention relates to an air diffuser for vehicle dashboards, of a simple and robust constitution, which allows obtaining a suitable orientation of air inflow in the vehicle.

### Background of the Invention

The air diffusers currently assembled in vehicle dashboards are generally constituted of a large number of parts and also have several actuating elements, all of which make the handling more difficult and increase the cost of manufacture and assembly. Normally these diffusers can be provided with vertical and horizontal slats and actuating elements for the closure of the rear flap door and for directing the slats.

Diffusers of the type set forth are described for example in Spanish Utility Models application numbers 211665 and 206346, as well as in Spanish utility model with publication number 1046846, and European patent with Spanish publication number 2042344.

All the cases set forth have a great complexity and also a large number of parts to assemble and adjust.

### Description of the Invention

The object of the invention is to eliminate the drawbacks set forth, by means of a constitution based on a reduced number of parts, with a simple assembly thereof, and with a simple and effective system of adjustment or orientation so as to comfortably achieve the orientation of the air inflow entering the vehicle.

The air diffuser of the invention is constituted by a fixed tubular casing with a circular section, at least on the inner part, a moveable tubular casing, also with a circular section, which is coaxially assembled inside the fixed casing with free rotational ability thereon, and by an assembly of integral flaps inscribed in a spherical surface with the same diameter as the inner diameter of the moveable casing and which are assembled on said moveable casing with rotational freedom about a diametrical axis, between a closing position and an opening position.

In this way, the diffuser of the invention is constituted by only three pieces: the fixed tubular casing, which is the outer element of the diffuser, the moveable tubular casing, assembled inside the fixed tubular casing, and the spherically configured flap assembly.

The operating principle of the diffuser of the invention is based on an element of spherical surface, defined by the flap assembly, rotating about a linear axis, actuating the central flap as a closing flap door. In turn, the moveable tubular casing is able to rotate on the fixed tubular casing, dragging the spherical surface flap assembly, thus obtaining the dual movement of the horizontal and the vertical component to direct the air inflow.

The moveable tubular casing will have an outer diameter which is approximately the same as that of the inner one in the fixed tubular casing and furthermore, both casings may be provided with complimentary ring guides on their opposing surfaces defining the rotating means for the rotation of the moveable casing on the fixed casing. These ring guides can consist of one or more outer ribs projecting from one of the surfaces and in the same number of grooves as the other surface, of a section and position coinciding with the ribs.

In turn, the flap assembly is constituted by an odd number of circular and parallel flaps, for example, three, joined by intermediate cross-pieces. The central flap will have the same diameter as the inner one of the moveable tubular casing so as to define the closing flap door. The remaining flaps towards either side will be of decreasing diameter, in correspondence with the segment in which they are located.

### Brief Description of the Drawings

The features of the diffuser of the invention can be better understood by means of the following description, made with reference to the attached drawings which show an embodiment and in which:

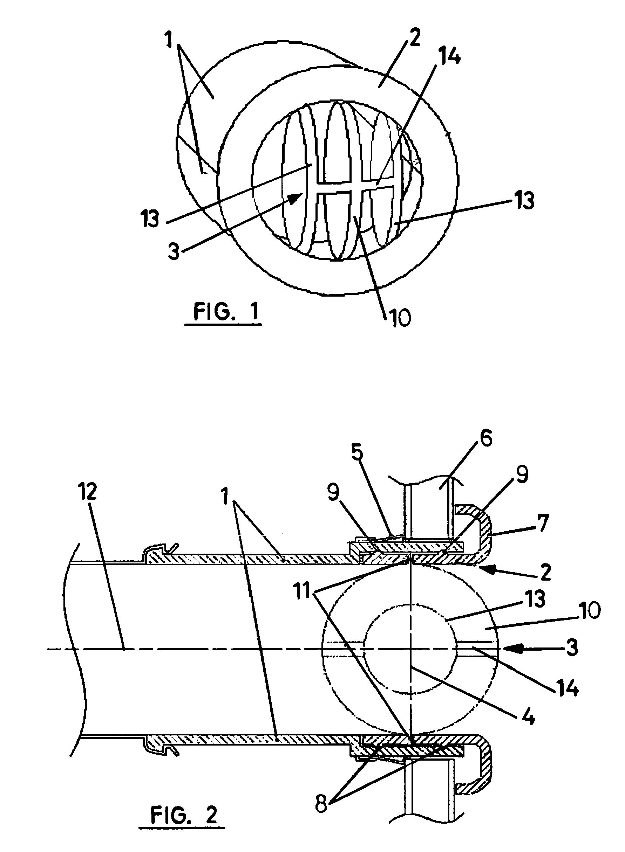

Figure 1 shows a front perspective view of a diffuser constituted according to the invention.
Figure 2 shows a diametrical sectional view of the diffuser of Figure 1.

### DETAILED DESCRIPTION OF AN EMBODIMENT

The diffuser illustrated in the drawings is constituted of a fixed tubular casing 1 of a circular section; a moveable tubular casing 2, also of a circular section, which is coaxially assembled inside the fixed casing 1 with rotational freedom about the same and of a flap assembly which is generally referenced by number 3, integral and inscribed in a spherical surface of the same diameter as the inner diameter of the moveable casing 2, this flap assembly being assembled on the moveable casing with rotational freedom about a diametrical axis 4.

The fixed casing 1 may be diametrically sub-divided into two halves which can be coupled and joined together This casing may act as a carrier of metal clips 5, or they may be directly integrated in the mould for fixing the diffuser assembly in the panel 6. The two halves forming the casing 1 may be joined together by clips, welding or by means of any other system.

The moveable casing 2 can also be made up of two pieces and may be provided with an outer projection 7, which can be adapted to the surface of the panel 6 to form the visible surface. In addition, the fixed casing 2 may be provided on the outer surface with two outer ribs 8 which can be coupled in other grooves 9 which the fixed casing 1 has on its inner surface. The ribs 8 and grooves 9 will coincide in dimension and position for defining the guides which will secure the assembly of the moveable casing 2 in the fixed casing 1 and additionally, the free rotation of said casing 2 inside casing 1.

The flap assembly 3 is made up of an odd number of flaps, three in the example illustrated in the drawings, of which the central one, referenced as number 10, has the same diameter as the inner one of the moveable casing 2, and two pivots defining the axis of rotation 4 project from its periphery in diametrically opposed positions, which pivots can be introduced into the orifices 11, also located in diametrically opposing positions, which the wall of the moveable casing 2 has. In this way, the flap assembly 3 is able to rotate freely about the axis 4 and also the inner tubular fixing 2 can rotate about the axis 12 of both casings.

The flaps 13 located at either side of the central flap 10 have a smaller diameter, coinciding with the diameter of the circular segment in which they are located.

The flaps 10 and 13 are joined by means of intermediate ribs or arms, forming an integral assembly.

The design of the different flaps allows a certain freedom, the only restriction being imposed by the central axis 10, with a maximum rotation of 180°, which must be of the same diameter as the inner one of the moveable casing 2 for being able to achieve the closing of the diffuser when the flap assembly 3 is rotated in one direction or another.

As previously set forth, the operating principle is based on a spherical surface, defined by the flap assembly 3, rotating about the axis 4, actuating the central flap 10 as a closing flap door, perfectly fitting with the inner surface of the moveable casing 2. In turn, the spherical surface defined by the flap assembly 3 rotates integrally with the moveable casing 2, obtaining with this dual movement the horizontal and vertical components for suitably directing the air flow.

With the constitution described, a diffuser is obtained with a simple mechanics or operating system and with a reduced number of components, thereby reducing manufacture and assembly time and the cost of the assembly.

## Claims

1. An air diffuser for vehicle dashboards, **characterized in that** it is constituted of a fixed tubular casing of a circular section; a moveable tubular casing, also of a circular section which is coaxially assembled inside the fixed casing with free rotational ability about the same; and an assembly of integral flaps, inscribed in a spherical surface having a diameter equal to the inner diameter of the moveable casing, which is assembled on said moveable casing with rotational freedom about a diametrical axis, between a closing position and an opening position.

2. A diffuser according to claim 1, **characterized in that** the moveable tubular casing has an outer diameter which is approximately the same as that of the inner one of the fixed tubular casing, both casings having complementary ring guides on their opposing surfaces defining the rolling means between said surfaces.

3. A diffuser according to claim 2, **characterized in that** the mentioned ring guides consist of one or more outer ribs which project from one of the surfaces and in the same number of grooves, of a section and position coinciding with the ribs, as the other surface.

4. A diffuser according to claim 1, **characterized in that** the flap assembly is made up of an odd number of circular and parallel flaps, joined by middle cross-pieces, the central flap having the same diameter as the inner one of the moveable tubular casing and the remaining ones towards one side and the other of decreasing diameter, coinciding with the segment in which they are located.

5. A diffuser according to claim 1, **characterized in that** the diametrical axis according to which the flap assembly is assembled on the moveable casing is defined by two pivots which project from the side of the central flap, in diametrically opposing positions, and these are introduced into opposing housings which the moveable casing has.
